# EUROPEAN PATENT APPLICATION

(11) **EP 4 641 482 A1**
(43) Date of publication of application: **29.10.2025**
(21) Application number: 23905736.7
(22) Date of filing: 08.12.2023
(51) Int. Cl.: G06T 5/00

(54) **IMAGE GENERATION METHOD AND APPARATUS, AND ELECTRONIC DEVICE**

(30) Priority: 19.12.2022 CN 202211634290
(71) Applicant: Beijing Zitiao Network Technology Co., Ltd., Beijing 100190 (CN)
(72) Inventor: LIU, Wei, Beijing 100028 (CN); SUN, Shiqi, Beijing 100028 (CN)
(74) Representative: Marks & Clerk LLP
(86) International application number: PCT/CN2023/137453
(87) International publication number: WO 2024/131569

(57) **Abstract**

The present disclosure provides an image generation method and an apparatus, and an electronic device. The image generation method comprises: acquiring a target text, a sketch image, and a noise image; obtaining a fusion vector on the basis of the target text and the sketch image; and performing denoising processing on the noise image on the basis of the fusion vector, to obtain a target image matching the target text and the sketch image. According to embodiments of the present disclosure, the image generation effect is improved, and the objective of generating an image according to the willingness of a user is achieved.

## Description

The present application claims priority to Chinese Patent Application No. 202211634290.6, filed on December 19, 2022, which is incorporated herein by reference in its entirety as a part of the present application.

### TECHNICAL FIELD

The present disclosure relates to an image generation method and apparatus, and an electronic device.

### BACKGROUND

With the application and development of artificial intelligence technology in the image field, image generation technology has emerged. Currently, there is a demand for generating images purposefully according to the needs of a user. With the continuous development of multimodal technology, text-to-image generation technology is changing fast and has achieved good results. However, description for an image based on a language text has some limitations and is difficult to meet the needs of the user

### SUMMARY

The present disclosure provides an image generation method and apparatus, and an electronic device.

According to a first aspect, the present disclosure provides an image generation method. The method includes:
obtaining a target text, a sketch image, and a noise image;
obtaining a fusion vector based on the target text and the sketch image; and
denoising the noise image based on the fusion vector, to obtain a target image matching the target text and the sketch image.

According to a second aspect, the present disclosure provides an image generation apparatus. The apparatus includes:
an obtaining module, configured to obtain a target text, a sketch image, and a noise image;
a fusion module, configured to obtain a fusion vector based on the target text and the sketch image; and
a denoising module, configured to denoise the noise image based on the fusion vector, to obtain a target image matching the target text and the sketch image.

According to a third aspect, the present disclosure provides a computer-readable storage medium storing a computer program, where when the computer program is executed by a processor, the method according to any one of the first aspect is implemented.

According to a fourth aspect, the present disclosure provides an electronic device, including a memory, a processor, and a computer program stored on the memory and executable on the processor, where when the processor executes the computer program, the method according to any one of the first aspect is implemented.

It should be understood that the above general description and the following detailed description are merely exemplary and illustrative, and are not intended to limit the present disclosure.

### BRIEF DESCRIPTION OF DRAWINGS

In order to describe the technical solutions in the embodiments of the present disclosure more clearly, the accompanying drawings for describing the embodiments are briefly described below. Apparently, the accompanying drawings in the following description are merely some embodiments recited in the present disclosure, and persons of ordinary skill in the art may still derive other accompanying drawings from these accompanying drawings without creative efforts.
FIG. 1 is a schematic diagram of an image generation scenario according to an exemplary embodiment of the present disclosure;
FIG. 2 is a flowchart of an image generation method according to an exemplary embodiment of the present disclosure;
FIG. 3 is a schematic diagram of an image generation example according to an exemplary embodiment of the present disclosure;
FIG. 4 is a block diagram of a generation method apparatus according to an exemplary embodiment of the present disclosure;
FIG. 5 is a schematic block diagram of an electronic device according to some embodiments of the present disclosure;
FIG. 6 is a schematic block diagram of another electronic device according to some embodiments of the present disclosure; and
FIG. 7 is a schematic diagram of a storage medium according to some embodiments of the present disclosure.

### DETAILED DESCRIPTION

In order to make those skilled in the art better understand the technical solutions in the present disclosure, the technical solutions in the embodiments of the present disclosure will be clearly and completely described below with reference to the accompanying drawings in the embodiments of the present disclosure. Apparently, the described embodiments are merely some rather than all of the embodiments of the present disclosure. All the other embodiments obtained by those of ordinary skill in the art based on the embodiments of the present disclosure without any creative effort shall fall within the scope of protection of the present disclosure.

When the following description relates to the accompanying drawings, the same numerals in different accompanying drawings denote the same or similar elements, unless otherwise indicated. The implementations described in the following exemplary embodiments do not represent all the implementations consistent with the present disclosure. Rather, they are merely examples of apparatuses and methods that are consistent with some aspects of the present disclosure and that are described in detail in the appended claims.

Terms used in the present disclosure are used only to describe specific embodiments rather than limit the present disclosure. Singular forms "a", "the", and "the" used in the present disclosure are also intended to include plural forms unless the context clearly indicates otherwise. It should be further understood that the term "and/or" used herein refers to any or all possible combinations including one or more associated listed items.

It should be understood that although the terms "first", "second", "third", and the like may be used in the present disclosure to describe various information, these information should not be limited to these terms. These terms are used only to distinguish the same type of information from each other. For example, without departing from the scope of the present disclosure, first information may also be referred to as second information, and similarly, second information may also be referred to as first information. Depending on the context, for example, the term "if" used herein may be explained as "when" or "while" or "in response to..., it is determined that".

With the application and development of artificial intelligence technology in the image field, image generation technology has emerged. Currently, there is a large demand for generating images purposefully according to the needs of a user. In the related art, with the continuous development of multimodal technology, text-to-image generation technology is changing fast and has achieved good results. However, description for an image based on a language text has some limitations and is difficult to meet the needs of the user. For example, if the user wants to generate an image including a target object (e.g., a person or an item) with a complex shape, position, or posture, it is difficult to describe the target object with a text. Specifically, for example, if the user wants to generate an image of a dancing girl, it is difficult, especially for non-dance professionals, to describe the expected dance pose in words clearly due to the variety of dance poses. Therefore, it is difficult to generate an ideal image.

The present disclosure provides an image generation method, which can use text information and simple contour sketches inputted by the user as an image generation condition, to guide the image generation, and obtain an image that meets the needs of the user. The image generation effect is improved, so that the generated image matches the needs of the user, thereby achieving the purpose of generating images according to the wishes of the user.

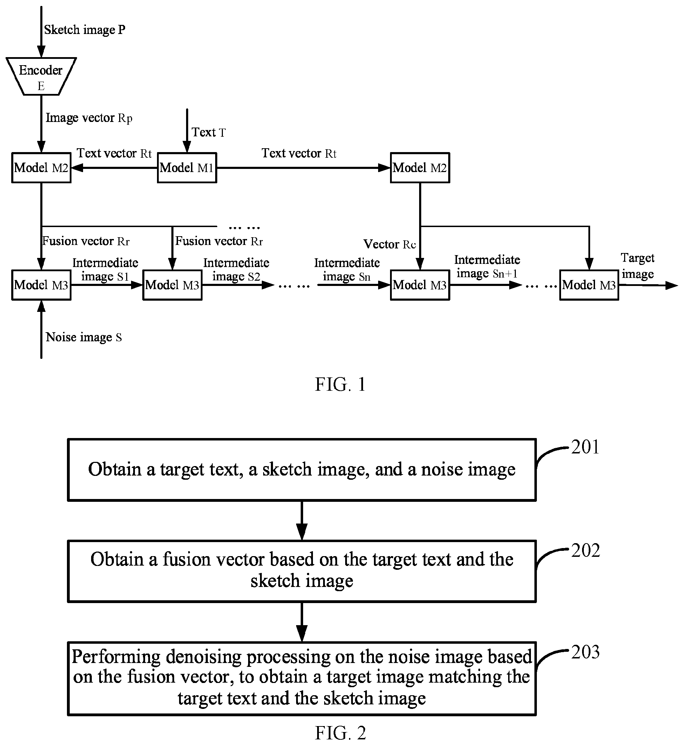

FIG. 1 is a schematic diagram of an image generation scenario according to an exemplary embodiment. Referring to FIG. 1, the solutions of the present disclosure are schematically illustrated below with reference to a complete and specific application example. The application example describes a specific image generation process.

As shown in FIG. 1, first, a user may provide a text T and a sketch image P as a condition for guiding the image generation. The text T may be a brief descriptive text from the user for a to-be-generated target image, and the sketch image P may be a contour and position of a target object in the to-be-generated target image that are simply outlined by the user as needed. For example, if the user wants to generate an image of a dancing girl, the text T may include "a dancing girl", and the sketch image P may be a contour and dance pose of the girl that are simply outlined by the user.

Then, the text T is inputted into a model M1 for text feature extraction, to obtain a text vector Rt corresponding to the text T. The text vector Rt may be, for example, a text embedding vector, and the model M1 may be a model capable of extracting the text embedding vector from the text. A specific type of the model M1 is not limited in this embodiment. Meanwhile, the sketch image P is inputted into an encoder E for image feature extraction, to obtain an image vector Rp corresponding to the sketch image P. The image vector Rt may be an image feature vector capable of performing information fusion with the text vector, and the encoder E may be an encoder capable of extracting the image feature vector from the image. A specific type of the encoder E is not limited in this embodiment.

Next, the text vector Rt and the image vector Rp may be inputted into a model M2, so that information fusion is performed on the text vector Rt and the image vector Rp, to obtain a fusion vector Rr that fuses information of the text T and information of the sketch image P. It may be understood that the model M2 may be any model capable of performing information fusion on a vector obtained based on a text and a vector obtained based on an image. A specific type of the model M2 is not limited in this embodiment. Optionally, the model M2 may be a deep learning model using an attention mechanism, thereby enabling better information fusion between the text vector Rt and the image vector Rp.

In addition, a noise image S is obtained, where the noise image S may be a randomly generated Gaussian white noise image. The fusion vector Rr and the noise image S are together inputted into a model M3, which may be a pre-trained diffusion model. The model M3 may perform one denoising operation on the noise image S based on the fusion vector Rr, to obtain an intermediate image S1. The intermediate image S1 is an image obtained by removing a small portion of noise from the noise image S. Therefore, the intermediate image S1 still includes a large amount of noise. The intermediate image S1 and the fusion vector Rr are then inputted into the model M3, which may perform one denoising operation on the intermediate image S 1 based on the fusion vector Rr, to obtain an intermediate image S2. The following similar processes are completed in the same manner and will not be repeated herein.

Optionally, the text vector Rt may also be inputted into the model M2 alone. After the text vector Rt is processed by the model M2, a vector Rc containing only the information of the text T is obtained. After an intermediate image Sn is obtained by performing n denoising operations, the intermediate image Sn and the vector Rc may be together inputted into the model M3, which may perform one denoising operation on the intermediate image Sn based on the vector Rc, to obtain an intermediate image Sn+1. A target image is then obtained through a plurality of similar denoising operations. The target image is a clear image that meets the needs of the user.

It should be noted that the encoder E, the model M1, the model M2, and the model M3 may be trained together. Specifically, a sample image may be obtained first, and then, a sketch image matching the sample image is obtained. For example, the sketch image matching the sample image may be manually drawn. For another example, the sketch image matching the sample image may also be extracted using a preset image processing algorithm. For still another example, the sketch image matching the sample image may also be extracted using a machine learning model. It may be understood that the sketch image matching the sample image may also be extracted in any other appropriate manner, which is not limited in this embodiment. Text content matching the sample image is obtained. For example, the text content matching the sample image may be manually edited, or may be extracted through the machine learning model, and so on.

Then, a plurality of noise adding operations are performed on the sample image, with each noise adding operation adding a small amount of Gaussian white noise to the sample image, to obtain a sample noise image. Then, the sample noise image, the text content matching the sample image, and the sketch image are respectively inputted into the corresponding to-be-trained models according to the information flow directions shown in FIG. 1, and a prediction loss is calculated based on output results. Model parameters of the to-be-trained models are adjusted based on the prediction loss, thereby completing the training of the models.

The present disclosure is described in detail below with reference to specific embodiments.

FIG. 2 is a flowchart of an image generation method according to an exemplary embodiment. The execution body of the method may be implemented as any device, platform, server, or device cluster with computing and processing capabilities. The method includes the following steps.

As shown in FIG. 2, in step 201, a target text, a sketch image, and a noise image are obtained.

In this embodiment, the noise image may be randomly generated using Gaussian white noise. A specific manner of generating the noise image is not limited in this embodiment. The target text may be a brief descriptive text from a user for a to-be-generated target image, and the sketch image may be a contour and position of a target object in the to-be-generated target image that are simply outlined by the user as needed. For example, if the user wants to generate an image of a cat, the target text may include "a sleeping lazy cat", and the sketch image may be a contour and sleeping posture of the cat that are simply outlined by the user. The target text may be edited by the user, or may be text content selected by the user from a plurality of alternative text options. The sketch image may be drawn manually by the user, or may be a sketch image selected by the user from a plurality of alternative sketch image options. It may be understood that the target text and the sketch image may be obtained in any appropriate manner. A specific manner of obtaining the target text and the sketch image is not limited in this embodiment.

In step 202, a fusion vector is obtained based on the target text and the sketch image.

In this embodiment, the fusion vector may be obtained based on the target text and the sketch image. In an implementation, first, the target text may be converted into a reference image using a machine learning model, and then, an image feature of the reference image and an image feature of the sketch image are extracted and fused to obtain the fusion vector.

In another implementation, a text vector corresponding to the target text may be obtained as a first feature vector, an image vector corresponding to the sketch image may be obtained as a second feature vector, and information fusion is performed on the first feature vector and the second feature vector, to obtain the fusion vector. Optionally, information fusion may be performed on the first feature vector and the second feature vector using an attention mechanism. Specifically, first, a language model pre-trained using paired image-text data is used to convert the target text into a text vector as the first feature vector, and then, a pre-trained encoder is used to process the sketch image, to obtain the image vector as the second feature vector. The first feature vector and the second feature vector are inputted into a deep learning model based on the attention mechanism. The deep learning model may perform information fusion on the first feature vector and the second feature vector, to obtain the fusion vector. By fusing the target text and the sketch image using the attention mechanism in this embodiment, the fusion effect is improved.

In step 203, the noise image is denoised based on the fusion vector, to obtain a target image matching the target text and the sketch image.

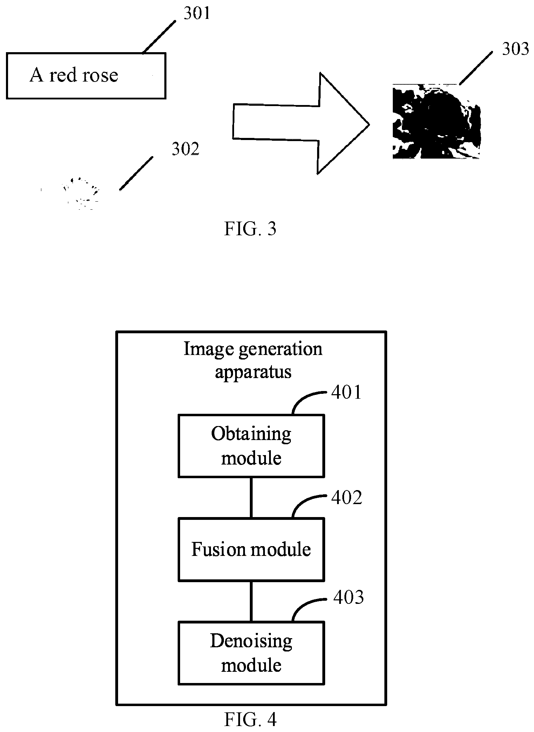

In this embodiment, the noise image may be denoised based on the fusion vector and based on the content described in the target text and the contour outlined in the sketch image, to obtain the target image. As shown in FIG. 3, for example, the text content of the target text 301 may include "a red rose," and the sketch image 302 may be a contour of a rose that is simply outlined by the user. The target image 303 may be obtained by denoising the noise image based on the fusion vector formed by the target text and the sketch image. The target image 303 is consistent with the description of the target text 301 and the contour of the sketch image 302.

In an implementation, the noise image may be subjected to one-step denoising using a machine learning model or a preset algorithm and based on the fusion vector, to obtain the target image.

In another implementation, the noise image may also be denoised using a pre-trained target model through a plurality of denoising operations, where the pre-trained target model may be a diffusion model. The plurality of denoising operations may include at least one first operation, which is an operation that guides the denoising using the target text and the sketch image as a condition (that is, an operation of denoising based on the fusion vector).

Optionally, the plurality of denoising operations may further include at least one second operation, which is an operation that guides the denoising using only the target text as a condition (that is, an operation of denoising based on a target vector corresponding to the target text). Specifically, the inventor found in a plurality of experiments that it is more likely to cause over-fitting by using both the target text and the sketch image as the condition for denoising. That is, the sketch image has excessive constraint on the target image. Therefore, the inventor thought that in the plurality of denoising operations, in addition to using the target text and the sketch image as the condition, using only the target text as the condition is also possible, thereby solving the over-fitting problem during denoising.

It may be understood that the first operation and the second operation may be performed alternately among the plurality of denoising operations. Optionally, the first operation may also be performed first, and then the second operation is performed. Since the first operation using the target text and the sketch image as the condition is performed first, the sketch image can better constrain the formation of the contour of the target object in the target image, and the target text mainly constrains the formation of details in the target image, thereby avoiding the over-fitting problem, and also further improving the quality of the generated image.

Specifically, any one first operation may include the following operations. First, an image to be denoised is determined. If the first operation is the first operation among the plurality of denoising operations, the obtained noise image may be used as the image to be denoised. If the first operation is not the first operation among the plurality of denoising operations, a processing result of a previous denoising operation may be used as the image to be denoised. It may be understood that the previous denoising operation may be either the first operation or the second operation.

Next, a first time series vector corresponding to the first operation is determined, and the image to be denoised is denoised using the target model and based on the fusion vector and the first time series vector. The first time series vector (e.g., time embedding), may be a vector capable of representing the time series of the first operation among the plurality of denoising operations. For example, if the first operation is the n-th operation among the plurality of denoising operations, the first time series vector corresponding to the first operation is a vector capable of representing the n-th operation. Specifically, the fusion vector and the first time series vector may be combined (e.g., added), to obtain a first condition vector. Then, the image to be denoised is denoised using the target model and based on the first condition vector and the fusion vector. It should be noted that, in addition to the fusion vector, other feature vectors, together with the fusion vector, may be combined with a time series vector, to obtain a condition vector, which is not limited in this embodiment.

For the second operation, before the second operation is performed, it is also necessary to obtain the text vector corresponding to the target text as the first feature vector, and transform the first feature vector to obtain the target vector. Any second operation may include the following operations. First, an image to be denoised, and a second time series vector corresponding to the second operation are determined. If the second operation is the first operation among the plurality of denoising operations, the obtained noise image may be used as the image to be denoised. If the second operation is not the first operation among the plurality of denoising operations, a processing result of the previous denoising operation may be used as the image to be denoised. It may be understood that the previous denoising operation may be either the first operation or the second operation.

Then, the image to be denoised is denoised using the target model and based on the target vector and the second time series vector. Specifically, the target vector and the second time series vector may be combined, to obtain a second condition vector. Then, the image to be denoised is denoised using the target model and based on the second condition vector and the target vector.

For this embodiment, a specific application scenario may be that if the user wants to create a work, the user may simply outline a sketch of the work according to their own ideas, convert the sketch into a preset image format, and edit a brief text description. The sketch includes a shape, position, and contour of the target object. The sketch and the text description may be used as a condition, to guide the generation of a target image that can reflect the ideas of the user.

Another specific application scenario may be that during the detection of a criminal case, a witness may select a sketch closest to the face or physique of a suspect from a plurality of alternative options, or the witness may personally outline the face or physique of the suspect, and then edit a text description that describes the detailed features of the suspect. An image closer to the suspect may be generated under the guidance of the sketch and the text description.

This embodiment is not limited to the above application scenarios, and may also be applied to other scenarios. In the image generation method provided in the present disclosure, the fusion vector is obtained based on the target text and the sketch image, and the obtained noise image is denoised based on the fusion vector, to obtain the target image matching the target text and the sketch image. Since this embodiment fuses the sketch image with spatial information (which is difficult to describe in words) and the target text including a detailed feature description (which is difficult to draw), the coupling of the spatial information and the text information is increased, so that the denoised target image matches and better meets the needs of the user. This improves the image generation effect and achieves the purpose of generating images according to the wishes of the user.

Corresponding to the above embodiment of the image generation method, the present disclosure further provides an embodiment of an image generation apparatus.

As shown in FIG. 4, which is a block diagram of an image generation apparatus according to an exemplary embodiment of the present disclosure. The apparatus may include: an obtaining module 401, a fusion module 402, and a denoising module 403.

The obtaining module 401 is configured to obtain a target text, a sketch image, and a noise image.

The fusion module 402 is configured to obtain a fusion vector based on the target text and the sketch image.

The denoising module 403 is configured to denoise the noise image based on the fusion vector, to obtain a target image matching the target text and the sketch image.

In some implementations, the fusion module 402 may include: an obtaining submodule and a fusion submodule (not shown in the figure).

The obtaining submodule is configured to obtain a first feature vector corresponding to the target text, and a second feature vector corresponding to the sketch image.

The fusion submodule is configured to perform information fusion on the first feature vector and the second feature vector, to obtain the fusion vector.

In some other implementations, the fusion submodule is configured to perform information fusion on the first feature vector and the second feature vector using an attention mechanism.

In some other implementations, the denoising module 403 may include: an execution submodule (not shown in the figure).

The execution submodule is configured to perform a plurality of denoising operations using a pretrained target model, to denoise the noise image. The plurality of denoising operations include at least one first operation of denoising based on the fusion vector.

In some other implementations, the execution submodule may perform any first operation in the following manner: determining an image to be denoised, where if the first operation is the first operation among the plurality of denoising operations, the image to be denoised is the noise image; if the first operation is not the first operation among the plurality of denoising operations, the image to be denoised is a processing result of a previous denoising operation; and determining a first time series vector corresponding to the first operation, and denoising the image to be denoised using the target model and based on the fusion vector and the first time series vector.

In some other implementations, the execution submodule may denoise the image to be denoised using the target model and based on the fusion vector and the first time series vector in the following manner: obtaining a first condition vector based on at least the fusion vector and the first time series vector; and denoising the image to be denoised using the target model and based on the first condition vector and the fusion vector.

In some other implementations, the obtaining module 401 is further configured to obtain a first feature vector corresponding to the target text, and transform the first feature vector to obtain a target vector. The plurality of denoising operations further include at least one second operation of denoising based on the target vector.

In some other implementations, the execution submodule may perform any second operation in the following manner: determining an image to be denoised, and a second time series vector corresponding to the second operation; and denoising the image to be denoised using the target model and based on the target vector and the second time series vector.

In some other implementations, the execution submodule may first perform a preset number of first operations, and then perform the second operation after the first operation is completed.

The apparatus embodiment is substantially corresponding to the method embodiment, and therefore for a related part, reference may be made to the descriptions of the part in the method embodiment. The apparatus embodiment described above is merely schematic, where the units described as separated components may or may not be physically separated, and the components displayed as units may or may not be physical units, that is, may be located at one position or may be distributed to a plurality of network units. Some or all of the modules may be selected according to actual needs to achieve the objectives of the solutions of the embodiments of the present disclosure, which can be understood and implemented by those of ordinary skill in the art without involving any inventive effort.

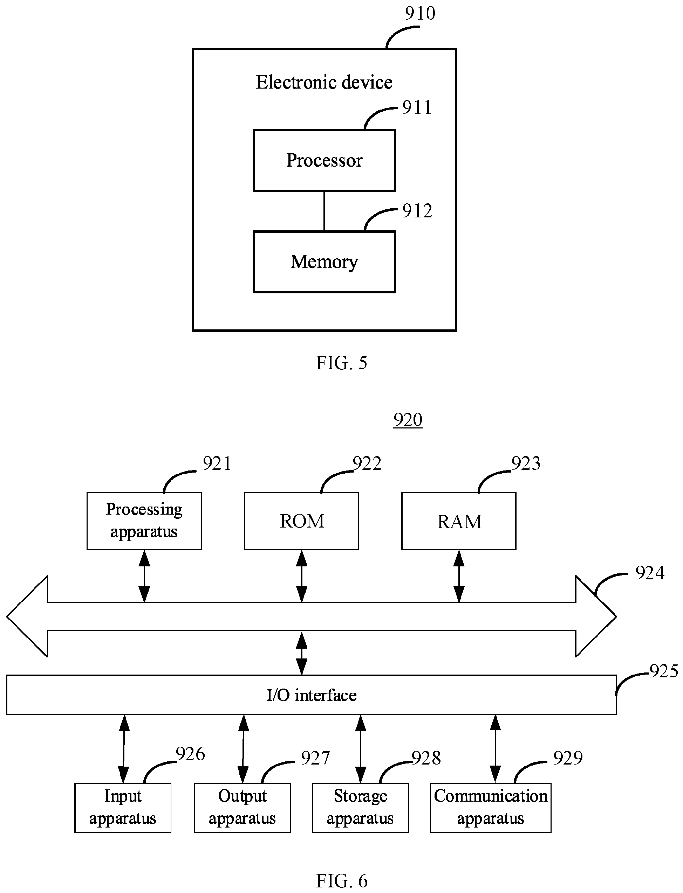

FIG. 5 is a schematic block diagram of an electronic device according to some embodiments of the present disclosure. As shown in FIG. 5, the electronic device 910 includes a processor 911 and a memory 912, and may be configured to implement a client or a server. The memory 912 is configured to store computer-executable instructions (e.g., one or more computer program modules) in a non-transitory manner. The processor 911 is configured to run the computer-executable instructions. The computer-executable instructions, when run by the processor 911, may perform one or more of steps in the image generation method described above, thereby implementing the image generation method described above. The memory 912 and the processor 911 may be interconnected by a bus system and/or other form of connection mechanism (not shown).

The processor 911 may be, for example, a central processing unit (CPU), a graphics processing unit (GPU), or other form of processing unit having data processing capabilities and/or program execution capabilities. The central processing unit (CPU) may have an X86 or ARM architecture or the like. The processor 911 may be a general-purpose processor or a special-purpose processor, and may control other components in the electronic device 910 to perform desired functions.

For example, the memory 912 may include any combination of one or more computer program products, which may include various forms of computer-readable storage media, such as a volatile memory and/or a non-volatile memory. The volatile memory may include, for example, a random access memory (RAM) and/or a cache memory (cache). The non-volatile memory may include, for example, a read-only memory (ROM), a hard disk, an erasable programmable read-only memory (EPROM), a portable compact disk read-only memory (CD-ROM), a USB memory, and a flash memory. The computer-readable storage medium may store one or more computer program modules, and the processor 911 may run the one or more computer program modules to implement the various functions of the electronic device 910. The computer-readable storage medium may further store various applications and various data, as well as various data used and/or generated by the applications, etc.

It should be noted that for the specific functions and technical effects of the electronic device 910 in the embodiments of the present disclosure, reference may be made to the above description of the image generation method. Details are not described herein again.

FIG. 6 is a schematic block diagram of another electronic device according to some embodiments of the present disclosure. The electronic device 920 is, for example, adapted to implement the image generation method according to the embodiments of the present disclosure. The electronic device 920 may be a terminal device or the like, and may be configured to implement a client or a server . The electronic device 920 may include, but is not limited to, a mobile terminal such as a mobile phone, a notebook computer, a digital broadcast receiver, a personal digital assistant (PDA), a tablet computer (PAD), a portable multimedia player (PMP), a vehicle-mounted terminal (such as a vehicle navigation terminal), and a wearable electronic device, and a fixed terminal such as a digital TV, a desktop computer, and a smart home device. It should be noted that, the electronic device 920 shown in FIG. 6 is merely an example, and does not impose any limitation on the function and scope of use of the embodiments of the present disclosure.

As shown in FIG. 6, the electronic device 920 may include a processing apparatus (e.g., a central processing unit or a graphics processing unit) 921 that may perform a variety of appropriate actions and processing in accordance with a program stored in a read-only memory (ROM) 922 or a program loaded from a storage apparatus 928 into a random access memory (RAM) 923. The RAM 923 further stores various programs and data required for the operation of the electronic device 920. The processing apparatus 921, the ROM 922, and the RAM 923 are connected to each other through a bus 924. An input/output (I/O) interface 925 is also connected to the bus 924.

Generally, the following apparatuses may be connected to the I/O interface 925: an input apparatus 926 including, for example, a touchscreen, a touchpad, a keyboard, a mouse, a camera, a microphone, an accelerometer, and a gyroscope; an output apparatus 927 including, for example, a liquid crystal display (LCD), a speaker, and a vibrator; the storage apparatus 928 including, for example, a tape and a hard disk; and a communication apparatus 929. The communication apparatus 929 may allow the electronic device 920 to perform wireless or wired communication with other electronic devices to exchange data. Although FIG. 6 shows the electronic device 920 having various apparatuses, it should be understood that it is not required to implement or have all of the shown apparatuses, and the electronic device 920 may alternatively implement or have more or fewer devices.

For example, according to an embodiment of the present disclosure, the above image generation method may be implemented as a computer software program. For example, this embodiment of the present disclosure includes a computer program product, which includes a computer program carried on a non-transitory computer-readable medium, where the computer program includes program code for performing the above image generation method. In such an embodiment, the computer program may be downloaded and installed from a network through the communication apparatus 929, installed from the storage apparatus 928, or installed from the ROM 922. When the computer program is executed by the processing apparatus 921, the functions defined in the image generation method according to the embodiments of the present disclosure may be performed.

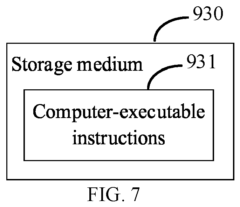

FIG. 7 is a schematic diagram of a storage medium according to some embodiments of the present disclosure. For example, as shown in FIG. 7, the storage medium 930 may be a non-transitory computer-readable storage medium for storing non-transitory computer-executable instructions 931. The image generation method described in the embodiments of the present disclosure may be implemented when the non-transitory computer-executable instructions 931 are executed by a processor. For example, when the non-transitory computer-executable instructions 931 are executed by the processor, one or more of steps in the image generation method described above may be performed.

For example, the storage medium 930 may be applied to the electronic device. For example, the storage medium 930 may include a memory in the electronic device.

For example, the storage medium may include a memory card of a smartphone, a storage component of a tablet computer, a hard disk of a personal computer, a random access memory (RAM), a read-only memory (ROM), an erasable programmable read-only memory (EPROM), a portable compact disk read-only memory (CD-ROM), a flash memory, or any combination of the above storage media, or may be other suitable storage media.

For example, for the description of the storage medium 930, reference may be made to the description of the memory in the embodiments of the electronic device, and details of the same parts are not described herein. For the specific functions and technical effects of the storage medium 930, reference may be made to the above description of the image generation method. Details are not described herein again.

It should be noted that in the context of the present disclosure, a computer-readable medium may be a tangible medium that may contain or store a program used by or in combination with an instruction execution system, apparatus, or device. The computer-readable medium may be a computer-readable signal medium, a computer-readable storage medium, or any combination thereof. Examples of the computer-readable storage medium may include, but are not limited to: electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

Those skilled in the art may readily figure out other implementation solutions of the present disclosure after considering the embodiments of the present disclosure. The present disclosure is intended to cover any variations, uses or adaptive changes of the present disclosure. These variations, uses or adaptive changes follow the general principle of the present disclosure and include common general knowledge or conventional technical means in the art which is not disclosed in the present disclosure. The present disclosure and embodiments are only considered as examples, and the true scope and spirit of the present disclosure are defined by the claims.

It should be understood that the present disclosure is not limited to the exact structure that has been described above and shown in the accompanying drawings, and various modifications and changes may be made without departing from the scope of the present disclosure. The scope of the present disclosure is limited by the appended claims.

## Claims

1. An image generation method, comprising:
obtaining a target text, a sketch image, and a noise image;
obtaining a fusion vector based on the target text and the sketch image; and
denoising the noise image based on the fusion vector, to obtain a target image matching the target text and the sketch image.

2. The image generation method according to claim 1, wherein the obtaining the fusion vector based on the target text and the sketch image comprises:
obtaining a first feature vector corresponding to the target text, and a second feature vector corresponding to the sketch image; and
performing information fusion on the first feature vector and the second feature vector, to obtain the fusion vector.

3. The image generation method according to claim 2, wherein the performing information fusion on the first feature vector and the second feature vector comprises:
performing information fusion on the first feature vector and the second feature vector using an attention mechanism.

4. The image generation method according to any one of claims 1 to 3, wherein the denoising the noise image based on the fusion vector, to obtain a target image matching the target text and the sketch image comprises:
performing a plurality of denoising operations using a target model, to denoise the noise image, wherein the plurality of denoising operations comprise at least one first operation of denoising based on the fusion vector.

5. The image generation method according to claim 4, wherein the first operation comprises:
determining an image to be denoised, wherein if the first operation is the first operation among the plurality of denoising operations, the image to be denoised is the noise image, and if the first operation is not the first operation among the plurality of denoising operations, the image to be denoised is a processing result of a previous denoising operation;
determining a first time series vector corresponding to the first operation; and
denoising the image to be denoised using the target model and based on the fusion vector and the first time series vector.

6. The image generation method according to claim 5, wherein the denoising the image to be denoised using the target model and based on the fusion vector and the first time series vector comprises:
obtaining a first condition vector based on at least the fusion vector and the first time series vector; and
denoising the image to be denoised using the target model and based on the first condition vector and the fusion vector.

7. The image generation method according to claim 4, further comprising: obtaining a first feature vector corresponding to the target text, and transforming the first feature vector to obtain a target vector,
wherein the plurality of denoising operations further comprise at least one second operation of denoising based on the target vector.

8. The image generation method according to claim 7, wherein the second operation comprises:
determining an image to be denoised, and a second time series vector corresponding to the second operation; and
denoising the image to be denoised using the target model and based on the target vector and the second time series vector.

9. The image generation method according to claim 7, wherein the performing a plurality of denoising operations comprises first performing a preset number of the first operations, and then performing the second operation after the first operation is completed.

10. An image generation apparatus, comprising:
an obtaining module configured to obtain a target text, a sketch image, and a noise image;
a fusion module configured to obtain a fusion vector based on the target text and the sketch image; and
a denoising module configured to denoise the noise image based on the fusion vector, to obtain a target image matching the target text and the sketch image.

11. A computer-readable storage medium storing a computer program, wherein the computer program, when executed in a computer, causes the computer to perform the image generation method according to any one of claims 1 to 9.

12. An electronic device, comprising a memory and a processor, wherein the memory stores executable code, and when the processor executes the executable code, the image generation method according to any one of claims 1 to 9 is implemented.

13. A computer program product, comprising a computer program, wherein when the computer program is executed by a processor, the image generation method according to any one of claims 1 to 9 is implemented.
